# EUROPÄISCHE PATENTANMELDUNG

(11) **EP 1 277 397 A1**
(43) Veröffentlichungstag der Anmeldung: **22.01.2003**
(21) Anmeldenummer: 01250266.2
(22) Anmeldetag: 18.07.2001
(51) Int. Cl.: A01K 23/00

(54) **Animal-Kot-Auffang-Geschirr**

(71) Anmelder: Wachner, Mandy, 13409 Berlin (DE)
(72) Erfinder: Wachner, Mandy, 13409 Berlin (DE)

(57) **Zusammenfassung**

Aus der Verbindung eines Geschirrs aus Gummi (Anpassung an den Tierkörper, desinfizierbar) mit einer Schiebeleiste und bzw. mit einer auswechselbaren elastischen, biologisch abbaubaren Einwegtüte mittels Einschub aus Hartpappe, entsteht ein Gegenstand, der den Kot von Tieren, vor allem Hunden, auffängt, so dass für die Umwelt, besonders in Großstädten, eine schonende Wirkung eintritt und der aufgefangene Kot mittels verschiedener Möglichkeiten (Behälter) gesammelt wird und so zur weiteren Nutzung (Biogasanlagen etc.) zu ermöglichen.

## Beschreibung

Der als Patent angemeldete Gegenstand soll den Kot von Haustieren, insbesondere Hunden auffangen und somit eine Verunreinigung von öffentlichen und privaten Strassen, Plätzen und sonstigen Orten verhindern.

Er soll dem Umweltschutz und der allgemeinen Hygiene dienen und vorrangig in Großstädten zur Anwendung kommen.

Er besteht aus einem Gummigeschirr mit auswechselbarer Einwegtüte zum auffangen des Kotes.
1. Allgemeine Beschreibung des Gummigeschirrs und der Auffangtüte
   Das A-K-A-Ges soll zunächst in drei verschiedenen Größen (klein, mittelgroß, groß) hergestellt werden.
   Das für das Geschirr verwendete Gummimaterial ermöglicht eine optimale Anpassung an den einzelnen Tierkörper und gewährleistet eine ebensolche Bewegungsfreiheit.
   Auf Grund der Eigenschaften des Gummimaterials besteht keine Verrutschungsgefahr.
   Die Eigenschaften des Geschirrmaterials sorgen weiterhin dafür, daß es abwaschbar und desinfizierbar ist.
   Es ist zunächst vorgesehen das Gummigeschirr aus einem Stück zu gießen oder zu spritzen. Weitere Stufen, bzw. Varianten sind, das Zusammenkleben an den Schnittflächen, oder die Schnittflächen Zusammenzuvulkanisieren, oder die Schnittflächen schmuckvoll durch Nieten aus unterschiedlichen Materialien zu verbinden.
   Mittels einer verstellbaren Haken-Ösen-Schnallen- Konstruktion aus Metall (Kunststoff als Alternative) wird das Gummigeschirr individuell an den Tierkörper angepaßt.
   Am Geschirr befinden sich zwei Schiebeleisten, in die die Auffangtüte mittels des Hartpappenrandes eingeschoben wird.
   Sodann ist die Auffangtüte bereit, den anfallenden Kot aufzunehmen.
   Die Auffangtüte soll aus einfarbigem und farbigem, biologisch abbaubarem Material (Naturlatex) bestehen.
   Das Material der Tüte soll geräuschlos, mindestens geräuscharm sein, um die Streßsituation für das Tier so weit als möglich zu entspannen.
   Die Auffangtüte verfügt über einen Hartpappenrand. Dieser hat an der rechten und der linken Seite jeweils einen, durch Schutzfolie gesicherten Klebestreifen, sowie zwei zusammenziehbare Schlaufen.
   Nachdem das Tier seine Exkremente in die Tüte abgeführt hat, zieht man die o.a. Schlaufen zu, die Tüte aus dem Gummigeschirr heraus, entfernt die Schutzfolien von den Klebestreifen und faltet den Hartpappenrand zusammen.
   Durch das Zusammenfalten kommt Klebestreifen auf Klebestreifen und die Auffangtüte ist hermetisch verschlossen, wobei der Zusammenzug der Schlaufen zusätzliche Sicherheit bietet.
   Nunmehr kann die Tüte bei nächster Gelegenheit entsorgt werden.
   Folgende Möglichkeiten der Entsorgung sind zunächst vorgesehen:
   - Sammelbehälter, die entsprechend gekennzeichnet sind und deren
      Bereitstellung durch die Kommunen oder deren Einrichtungen erfolgt.
   - Sammelbehälter, die von privaten Betreibern zur Verfügung gestellt werden, etwa um eine weitere Nutzung (Biogasanlagen etc.) zu ermöglichen.

   Weitere Formen sind angedacht.
2, Technische Beschreibung (vgl. hierzu die als Anlage beigefügte Zeichnung)
   2.1.Herstellung und Bestandteile
      Das A-K-A-Ges besteht aus folgenden Einzelteilen:
      - Schnalle "A"
      - Schnalle "B",
      - Öse "A"
      - Öse "B", die aus Metall bestehen sollen.(Kunststoff möglich)
      - x Gummistreifen von xxx Breite und xxx Länge (der Größe des Tieres angepaßt)
      - x Gummistreifen von xxx Breite und xxx Länge (der Größe des Tieres angepaßt)
   2.2.Zusammenbauen des A-K-A-Ges
      Man nimmt das Gummigeschirr "GS" in die eine-Hand und die Auffangtüte "AT" in die andere Hand. Sodann schiebt man die Auffangtüte "AT" in den Einschub "ESB", indem man den Hartpappenrand "HPR" in die Schiebeleisten "SL 1" und "SL 2" einschiebt.
      Nunmehr ist die Auffangtüte "AT" mit dem Gummigeschirr "GS" verbunden.
      Das A-K-A-Ges ist zusammengefügt, damit einsatzfähig und kann angelegt werden.
   2.3.Anlegen des A-K-A-Ges
      Das Gummigeschirr wird so um, bzw. auf den Tierkörper gelegt, daß Schnalle "A" und Öse "A" miteinander verbunden werden können.
      Sodann wird Schnalle "B" mit Öse "B" verbunden.
      Beide Verbindungen müssen so festgezogen sein, daß das Gummigeschirr nicht verrutschen kann, das Tier sich aber dennoch so natürlich, wie möglich bewegen kann.
   2.4.Abnehmen und Entsorgen der Auffangtüte
      Nach Aufnahme des Kotes durch die Auffangtüte "AT" wird diese aus den Schiebeleisten "SL 1" und "SL 2" herausgezogen, die Klebeflächen "KL 1" und "KL 2" werden von der Schutzfolie befreit und aufeinander geklebt.
      Die sich in unmittelbarer Nähe der Klebeflächen "KL 1" und "KL 2" befindlichen Schlaufen "S 1" und "S 2" werden zusammengezogen.
   2.5.Abnehmen des A-K-A-Ges
      Durch das Öffnen, bzw. trennen von Schnalle "A" und Öse "A" und Schnalle "B" von Öse "B" kann das Gummigeschirr schnell und unkompliziert abgenommen werden.

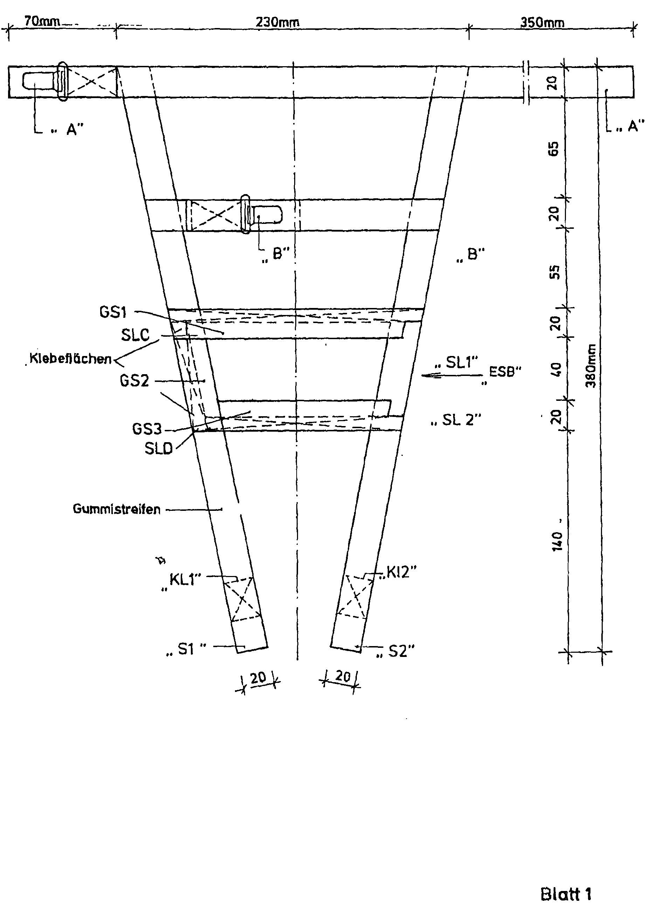

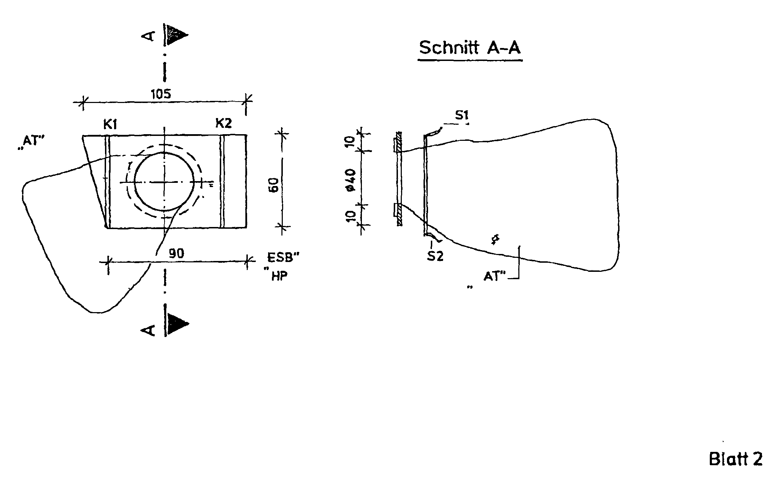

## Patentansprüche

1. Das A-K-A-Ges, **dadurch gekennzeichnet, daß** aus der Verbindung eines Geschirrs aus Gummi mit einer elastischen Tüte, mittels Einschub aus Hartpappe, ein Gegenstand entsteht, der den Kot von Tieren, vor allem Hunden, auffängt, so daß insbesondere eine die Umwelt schonende Wirkung eintritt.

2. A-K-A-Ges nach Anspruch 1, **dadurch gekennzeichnet, daß** das Geschirr aus Gummimaterial besteht, das sich jedem Tierkörper anpaßt und dadurch, daß es abwaschbar ist, beste hygienische Voraussetzungen bietet.

3. A-K-A-Ges nach Anspruch 1, **dadurch gekennzeichnet, daß** das Gummigeschirr sowohl aus mehreren Einzelteilen bestehen kann, die an den erforderlichen Schnittstellen, bzw. -flächen, durch Zusammenkleben. Vulkanisieren oder schmuckvolle Vernietung verbunden werden., als auch aus einem Stück gegossen oder gespritzt werden kann.

4. A-K-A-Ges nach Anspruch 1, **dadurch gekennzeichnet, daß** das Geschirr über Schiebeleisten verfügt, in die die Auffangtüte eingeschoben wird.

5. A-K-A-Ges nach Anspruch 1, **dadurch gekennzeichnet, daß** die Auffangtüte aus elastischem, biologisch abbaubarem Material (z.B. Naturlatex) besteht, das geräuschlos, bzw. geräuscharm während der gesamten Nutzung ist und als Einwegtüte Gebrauch findet.

6. A-K-A-Ges nach Anspruch 1, **dadurch gekennzeichnet, daß** die Auffangtüte unmittelbar unter der Öffnung über zwei zusammenziehbare Schlaufen verfügt.

7. A-K-A-Ges nach Anspruch 1, **dadurch gekennzeichnet, daß** die Auffangtüte über einen ebenfalls biologisch abbaubaren Papprand (z.B. Hartpappe) verfügt, der rechts und links jeweils einen mit Schutzfolie überzogenen Klebestreifen hat.

8. A-KA-Ges nach Anspruch 1, **dadurch gekennzeichnet, daß** sowohl das Gummigeschirr, als auch die Auffangtüte farbig gestaltet werden können.

9. A-K-A-Ges nach Anspruch 1, **dadurch gekennzeichnet, daß** daß es auch für andere Tiere ( vorrangig Haustiere) zur Anwendung gelangen kann.
